# EUROPEAN PATENT SPECIFICATION

(11) **EP 3 613 825 B1**
(45) Date of publication and mention of the grant of the patent: **07.01.2026**
(21) Application number: 19164396.4
(22) Date of filing: 21.03.2019
(51) Int. Cl.: C09K 8/524, C01G 51/00, C01G 53/00, C09K 8/588, C10L 10/16

(54) **NANOCOMPOSITE POUR POINT DEPRESSANT, PREPARATION METHOD AND USE THEREOF**
NANOKOMPOSITSTOCKPUNKTVERBESSERER, HERSTELLUNGSVERFAHREN UND VERWENDUNG DAVON
ABAISSEUR DE POINT D'ÉCOULEMENT NANOCOMPOSITE, SON PROCÉDÉ DE PRÉPARATION ET SON UTILISATION

(30) Priority: 20.08.2018 CN 201810946532
(43) Date of publication of application: 26.02.2020
(73) Proprietor: China University of Petroleum-Beijing, Beijing 102249 (CN)
(72) Inventor: WANG, Wei, Changping District, Beijing 102249 (CN); YANG, Feng, Changping District, Beijing 102249 (CN); HUANG, Huirong, Changping District, Beijing 102249 (CN); GAN, Dongying, Changping District, Beijing 102249 (CN); ZHANG, Xiaofeng, Changping District, Beijing 102249 (CN); PENG, Zeheng, Changping District, Beijing 102249 (CN); GONG, Jing, Changping District, Beijing 102249 (CN)
(74) Representative: Dehns

(56) References cited:
- WO-A1-2011/079508
- WO-A1-2016/095669
- WO-A1-2016/137922
- US-A1- 2015 114 635
- HE CUNZHE ET AL: "Influence of the nano-hybrid pour point depressant on flow properties of waxy crude oil", FUEL, IPC SCIENCE AND TECHNOLOGY PRESS, GUILDFORD, GB, vol. 167, 17 November 2015 (2015-11-17), pages 40 - 48, XP029350119, ISSN: 0016-2361, DOI: 10.1016/J.FUEL.2015.11.031
- TARANEH J B ET AL: "Effect of wax inhibitors on pour point and rheological properties of Iranian waxy crude oil", FUEL PROCESSING TECHNOLOGY, ELSEVIER BV, NL, vol. 89, no. 10, 1 October 2008 (2008-10-01), pages 973 - 977, XP025408079, ISSN: 0378-3820, [retrieved on 20080520], DOI: 10.1016/J.FUPROC.2008.03.013
- SHOJAATI FARYAR ET AL: "Experimental investigation of the inhibitory behavior of metal oxides nanoparticles on asphaltene precipitation", COLLOIDS AND SURFACES A: PHYSIOCHEMICAL AND ENGINEERING ASPECTS, ELSEVIER, AMSTERDAM, NL, vol. 531, 1 August 2017 (2017-08-01), pages 99 - 110, XP085184081, ISSN: 0927-7757, DOI: 10.1016/J.COLSURFA.2017.07.087

## Description

### Technical Field

The present disclosure relates to, in particular, a nanocomposite pour point depressant, a preparation method and use thereof, which belongs to the field of oil transportation and oil storage.

### Background

The crude oil produced in most of China's oil fields is waxy crude oil, from which paraffin crystal easily precipitates. When the temperature is further lowered, pieces of paraffin crystal are linked to each other to form a three-dimensional network structure, which will cause the crude oil to lose fluidity. In severe cases, there may even be serious consequences such as partial blockage, pipe rupture, crude oil leakage and the like, which will bring great difficulties to the oil exploitation and transportation.

Adding chemical pour point depressants is currently the most noticeable method to improve the low-temperature fluidity of waxy oils. The pour point depressant for crude oil is mainly a macromolecular polymer composed of a non-polar long-chain alkyl group and a polar group, of which the molecules can improve the shape and structure of the wax crystal in the crude oil by interacting with paraffin, thereby macroscopically reducing the pour point of waxy oil and improving its low-temperature fluidity. However, there are still some problems in this technology. For the complex thermal history and shear history of crude oil pipelines, the ordinary pour point depressants have problems such as instability or failure. Meanwhile, the pour point depressants have problems such as selectivity to crude oil, presence of a deterioration zone by temperature rise, and an increase in wax deposition in pipelines.

In order to solve these problems, nanomaterials have been introduced into the synthesis of pour point depressants domestically and abroad. With the development of nanotechnology, polymer/inorganic nanocomposites and inorganic nanocomposites have become hotspots in the synthesis of pour point depressants. By introducing inorganic nanoparticles into a polymer material, their properties can be greatly enhanced. In addition, nanomaterials have wide application prospects due to their unique surface effects, quantum size effects, small-size effects and macroscopic quantum tunnelling effects.

Document WO 2011/079508 A1 discloses a pour point depressant comprising a dispersing medium, an organic pour point depressant such as an ethylene-vinyl acetate copolymer and a clay (montmorillonite, hectorite, saponite) which can be surface treated.

### Summary of Invention

The object of the present disclosure is to provide a nanocomposite pour point depressant having a good pour point depressing effect, a preparation method and use thereof.

In order to achieve the above object, in one aspect, the present disclosure provides a nanocomposite pour point depressant, wherein the components for preparing the nanocomposite pour point depressant comprise, in terms of mass percentage:
0.1 wt% to 3 wt% of nickel cobaltate nanoparticles, 0.5 wt% to 15 wt% of ethylene-vinyl acetate copolymer (EVA), and the balance being an organic solvent capable of dissolving the ethylene-vinyl acetate copolymer;
wherein the organic solvent is crude oil, diesel, or gasoline.

In the above nanocomposite pour point depressant, preferably, the nickel cobaltate nanoparticles are in an amount of 0.5 wt% to 2 wt%.

In the above nanocomposite pour point depressant, preferably, the ethylene-vinyl acetate copolymer is in an amount of 1.5 wt% to 12 wt%.

In the above nanocomposite pour point depressant, preferably, the ethylene-vinyl acetate copolymer is in an amount 3 to 8 times greater than the amount of the nickel cobaltate nanoparticles.

In the above nanocomposite pour point depressant, preferably, the ethylene-vinyl acetate copolymer is in an amount 4 to 6 times greater than the amount of the nickel cobaltate nanoparticles.

In the above nanocomposite pour point depressant, preferably, the nickel cobaltate nanoparticles have a particle diameter of 400 to 600 nm.

In the above nanocomposite pour point depressant, preferably, the nickel cobaltate nanoparticles are prepared by a process comprising:
dissolving nickel nitrate hexahydrate, cobalt nitrate and urotropine, in a ratio, in a water-ethanol mixed solution, allowing them to react to prepare a nickel cobaltate precursor;
drying and calcining the nickel cobaltate precursor to obtain the nickel cobaltate nanoparticles.

In the above nanocomposite pour point depressant, preferably, in preparing the nickel cobaltate nanoparticles, the molar ratio between nickel nitrate hexahydrate, cobalt nitrate and urotropine is 1:(2-4):(3-5), further preferably 1:2:4.4.

In the above nanocomposite pour point depressant, preferably, in preparing the nickel cobaltate nanoparticles, the volume ratio of water to ethanol in the mixed solution is (2-4):1, further preferably 2:1.

In another aspect, the present disclosure also provides a method for preparing a nanocomposite pour point depressant as herein described, comprising: dispersing nickel cobaltate nanoparticles in an organic solution in which an ethylene-vinyl acetate copolymer is dissolved to prepare the nanocomposite pour point depressant.

In the above preparation method for preparing a nanocomposite pour point depressant, preferably, the dispersion is carried out by melt blending.

In the above preparation method for preparing a nanocomposite pour point depressant, preferably, the melt blending is carried out under a condition of stirring at 50 to 80°C for 10 to 50 minutes.

In still another aspect, the present disclosure also provides use of the above nanocomposite pour point depressant by adding the nanocomposite pour point depressant to a waxy crude oil in storage or in pipeline transportation.

In the above use of the nanocomposite pour point depressant, preferably, the nanocomposite pour point depressant is added in an amount of 100 to 300 ppm.

In the above use of the nanocomposite pour point depressant, preferably, the use further comprises a step of applying an alternating magnetic field to the waxy crude oil to which the nanocomposite pour point depressant is added.

The present disclosure provides a metal oxide nanocomposite pour point depressant, wherein the polymer and the nickel cobaltate nanomaterial together act to reduce the pour point and reduce the viscosity. After addition of the nanocomposite pour point depressant to the crude oil, wax crystals can be precipitated in a more compact arrangement than in the prior art, and the liquid oil encapsulated in the network structure is released. Therefore, the waxy crude oil to which the nanocomposite pour point depressant is added has modified macroscopic properties such as a decrease in pour point, a decrease in viscosity, and an increase in low-temperature fluidity. Moreover, the nanocomposite pour point depressant is magnetic to a certain extent. Therefore, applying an alternating magnetic field to the waxy crude oil to which the nanocomposite pour point depressant is added can further reduce the yield value of the waxy crude oil, thereby greatly reducing the difficulty in restarting the pipeline after it is shutdown, and reducing the cost of crude oil production.

### Brief Description of Drawings

FIG 1 is a graph showing the effect of a nanocomposite pour point depressant according to an embodiment of the present disclosure on the viscosity of a waxy oil;
FIG 2 is a graph showing the effect of nanocomposite pour point depressant according to an embodiment of the present disclosure on the yield value of a waxy oil;
FIG 3 is a graph showing a comparison of the viscosity-reducing effects of the nanocomposite pour point depressant according to an embodiment of the present disclosure and other pour point depressants;
FIG 4 is a graph showing a comparison of the yield value-reducing effects of the nanocomposite pour point depressant according to an embodiment of the present disclosure and other pour point depressants.

### Detailed Description of Invention

In order to make a person skilled in the art better understand the technical solutions in the present disclosure, the technical solutions in the embodiments of the present disclosure will be clearly and completely described below with reference to the accompanying drawings according to the embodiments of the present disclosure. It is apparent that the described embodiments are only a part of the embodiments of the present disclosure, and not all of them. Under the premise that no creative efforts are involved, all other embodiments obtained by a person skilled in the art based on the embodiments of the present disclosure shall fall within the scope of the present disclosure.

In one aspect, according to an embodiment of the present disclosure, there is provided a nanocomposite pour point depressant, wherein the components for preparing the nanocomposite pour point depressant comprise, in terms of mass percentage: 0.1 wt% to 3 wt% of nickel cobaltate nanoparticles, 0.5 wt% to 15 wt% of ethylene-vinyl acetate copolymer, and the balance being an organic solvent capable of dissolving the ethylene-vinyl acetate copolymer; wherein the organic solvent is crude oil, diesel or gasoline.

In an embodiment of the present disclosure, the nanocomposite pour point depressant is a composition in which the main components are nanoparticles and polymers. In the composition, the polymer is dissolved in the organic solvent, while the nanoparticles are insoluble but uniformly dispersed in the system. Due to the presence of the ethylene-vinyl acetate copolymer in the system, it appears in a mucus state (flowable gel form). Certainly, when using different solvents, or having differences in terms of component contents (within a limited range), the final products may have some differences in performance, but a good pour point depressing effect can be always obtained with the basic combination of nickel cobaltate nanoparticles and ethylene-vinyl acetate copolymer.

In addition, the applicant has found in research that the yield stress of crude oil can be reduced with waxy crude oil being subjected to an alternating magnetic field. This finding provides a new approach to solve the problem that it is difficult to restart a pipeline that has been shut down. In further research, it has been found that the waxy crude oil to which the nanocomposite pour point depressant provided by an embodiment of the present disclosure is added shows a very sound response to the alternating magnetic field, as compared with the conventional pour point depressant, and the yield value of the waxy crude oil can be greatly reduced under the applied alternating magnetic field. More extensive research shows that the nanocomposite pour point depressant itself is magnetic to a certain extent, and thus its response to the alternating magnetic field is very significant.

In some embodiments of the present disclosure, the nickel cobaltate nanoparticles may be used in an amount of 0.5 wt% to 2 wt%, preferably 0.6 wt% to 1.5 wt%.

In some embodiments of the present disclosure, the EVA may be used in an amount of 1.5 wt% to 12 wt%, preferably 3 wt% to 8 wt%.

In some embodiments of the present disclosure, the amount of EVA used is preferably equal to or more than 2 times, preferably 3 to 8 times, further preferably 4 to 6 times greater than the amount of the nickel cobaltate nanoparticles.

In some embodiments of the present disclosure, basically, conventional nanoscale nickel cobaltate particles can be used in the present disclosure. In some preferred embodiments, the nickel cobaltate nanoparticles have a particle size of 400 to 600 nm, preferably 450 to 550 nm.

In some embodiments of the present disclosure, the nickel cobaltate nanoparticles may be prepared by a method comprising: dissolving nickel nitrate hexahydrate, cobalt nitrate and urotropine, in a ratio, in a water-ethanol mixed solution, allowing them to react to prepare a nickel cobaltate precursor; drying and calcining the nickel cobaltate precursor to obtain the nickel cobaltate nanoparticles. In this manner, the nickel cobaltate nanoparticles exhibit magnetism which is more significant.

In some embodiments of the present disclosure, in preparing the nickel cobaltate nanoparticles, the molar ratio between the nickel nitrate hexahydrate, cobalt nitrate and urotropine is 1:(2-4):(3-5), preferably 1:2:4.4.

In some embodiments of the present disclosure, in the water-ethanol mixed solution, the volume ratio of water to ethanol is (2-4): 1, preferably 2: 1.

In some embodiments of the present disclosure, the nickel cobaltate nanoparticles are prepared under reaction conditions of maintaining a constant temperature at 90°C for 6 hours. After the reaction is completed and naturally cooled to room temperature, the prepared nickel cobaltate precursor can be collected by centrifugation.

In some embodiments of the present disclosure, the nickel cobaltate precursor is dried under a condition of vacuum drying at 60°C for 24 hours.

In some embodiments of the present disclosure, after drying the nickel cobaltate precursor, the calcination is carried out under conditions of calcinating at 400°C for 3 hours with a temperature rise rate of 1°C/min in an atmosphere of air. The calcined product is in the form of powder, which is cooled to obtain the nickel cobaltate nanoparticles.

In another aspect, the present disclosure also provides a method for preparing a nanocomposite pour point depressant as herein described, comprising: dispersing nickel cobaltate nanoparticles in an organic solution in which an ethylene-vinyl acetate copolymer is dissolved, to prepare the nanocomposite pour point depressant.

In some embodiments of the present disclosure, the dispersion is carried out by melt blending. In some preferred embodiments, the melt blending is carried out under a condition of stirring at 50 to 80°C for 10 to 50 minutes.

In still another aspect, the present disclosure also provides the use of the above nanocomposite pour point depressant by adding the nanocomposite pour point depressant to a waxy crude oil in storage or in pipeline transportation.

In some embodiments of the present disclosure, the nanocomposite pour point depressant is added in an amount of 100 to 300 ppm.

In some embodiments of the present disclosure, based on the magnetism of the nanocomposite pour point depressant itself, the use still comprises a step of applying an alternating magnetic field to the waxy crude oil to which the nanocomposite pour point depressant is added. By applying an alternating magnetic field, the yield value of the waxy crude oil can be significantly reduced, and the difficulty in restarting the pipeline after it is shutdown can be reduced, thereby reducing the cost of crude oil production.

### Examples

The following experimental examples may provide a reference for a person ordinarily skilled in the art to practice the invention or to verify the effects. These examples do not limit the scope of the claims.

### Experimental Example 1

In this experimental example, a nickel cobaltate nanoparticle was prepared by the following preparation steps:
(1) A beaker was used and 40 mL of deionized water and 20 mL of absolute ethanol were sequentially added to the beaker, and stirred to prepare an aqueous solution of ethanol;
(2) 2 mM nickel nitrate hexahydrate, 4 mM cobalt nitrate, and 8.8 mM urotropine were sequentially added to the aqueous ethanol solution obtained in step 1, and stirred at room temperature for 20 minutes with a magnetic stirrer.
(3) The mixture obtained in step 2 was transferred to a 100 ml stainless steel reaction vessel with a Teflon substrate, kept at a constant temperature of 90°C for 6 hours, and then naturally cooled to room temperature, and the nickel cobaltate precursor was collected by centrifugation.
(4) The precursor was washed with deionized water and absolute ethanol, and vacuum-dried at 60°C for 24 hours.
(5) The nickel cobaltate precursor powder was calcined at 400°C for 3 hours at a temperature rise rate of 1°C/min in an atmosphere of air.
(6) The calcined powder was naturally cooled to room temperature to obtain nickel cobaltate nanoparticles.

### Experimental Example 2

In this experimental example, a nanocomposite pour point depressant was prepared by the following preparation steps:
(1) EVA was dissolved in diesel to form a solution *m* (the mass fraction of EVA was 3 wt%);
(2) After heating the solution *m* to 70°C, the nickel cobaltate nanoparticles prepared in Experimental Example 1 were added thereto, and the mass ratio of nickel cobaltate nanoparticles to EVA was 1:5.
(3) the nanocomposite pour point depressant (MONP) was obtained after melt blending for 1 hour while maintaining the temperature at 70°C.

### Test Example 1

This test example provided a test experiment on the viscosity reduction of the nanocomposite pour point depressant prepared in Experimental Example 2, as follows:
A waxy simulated oil containing 10% wax was prepared by using D80 solvent oil and divided into five portions. Four of them were respectively formulated into experimental oil samples containing 50 ppm, 100 ppm, 150 ppm, and 200 ppm of the nanocomposite pour point depressant (MONP), and the remaining portion was used as a control sample.

The viscosity of the waxy simulated oil was measured by Anton Paar MCR101 rheometer at an experimental temperature of 10°C, to measure the change in the apparent viscosity of the experimental oil sample with the increase in the shear rate.

Pre-treatment: after the crude oil was heated to 60°C, it was loaded in the rheometer and statically cooled with a cooling rate controlled at 0.5°C/min, and after the temperature of the oil sample was lowered to 10°C, the temperature was kept constant for 20 minutes, so that the temperatures of the tested oil samples were consistent.

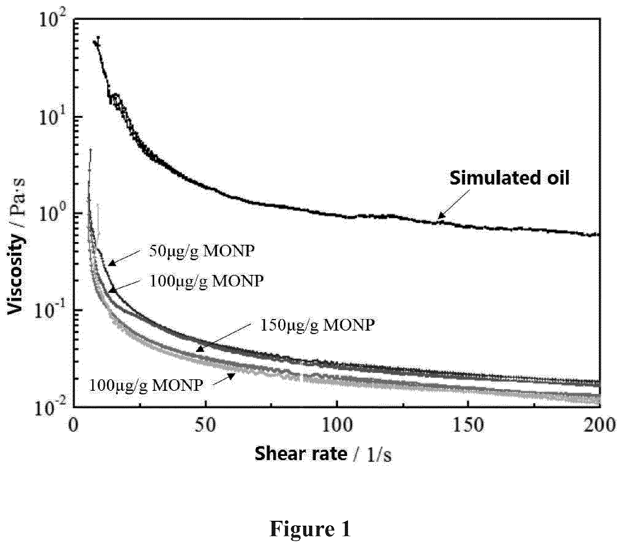

Experimental procedure: the pre-treated oil sample was loaded into the MCR101 rheometer measurement system, kept at a constant temperature of 60°C for 10 minutes, then the system temperature was lowered to 10°C and kept constant for 20 minutes with a cooling rate of 0.5°C/min. The measurement of a curve of apparent viscosity as a function of shear rate started from this moment. The results are shown in FIG. 1.

The test results showed that:
1. Compared with the blank oil sample, the viscosity of the oil with the additive measured at the same temperature and shear rate was lower, indicating that the nanocomposite pour point depressant reduced the viscosity of the simulated oil and improved the low-temperature fluidity.
2. As the amount of the additive increased, the apparent viscosity decreased gradually, and the increase in the concentration of the nanocomposite pour point depressant helped improve the low-temperature fluidity. In this example, the oil sample with 200 ppm nanocomposite pour point depressant exhibited the minimum viscosity and the highest low temperature fluidity.

### Test Example 2

This test example provided a test experiment on the yield stress of the nanocomposite pour point depressant prepared in Experimental Example 2, as follows:
A waxy simulated oil containing 10% of wax was prepared using D80 solvent oil as a test oil sample.

The yield stress of the waxy simulated oil was measured by MCR101 rheometer at an experimental temperature of 10°C. The blank oil was formulated into oil samples with additive containing 50 ppm, 100 ppm, 150 ppm, and 200 ppm of nanocomposite pour point depressant (MONP), and the change in yield stress of the waxy simulated oil at different additive concentrations was measured.

Pre-treatment: A pre-treatment is carried out in order to eliminate the memory of the waxy simulated oil on the thermal history and shear history. The specific operations were to heat the oil sample in a grinding-mouth bottle to 60°C in a water bath and to keep the temperature constantly for 2 hours, as the basic sample of the experiment. The rheometer measurement system was also set at 60°C during loading the sample to avoid the effect of sudden temperature change on the rheology of the oil sample.

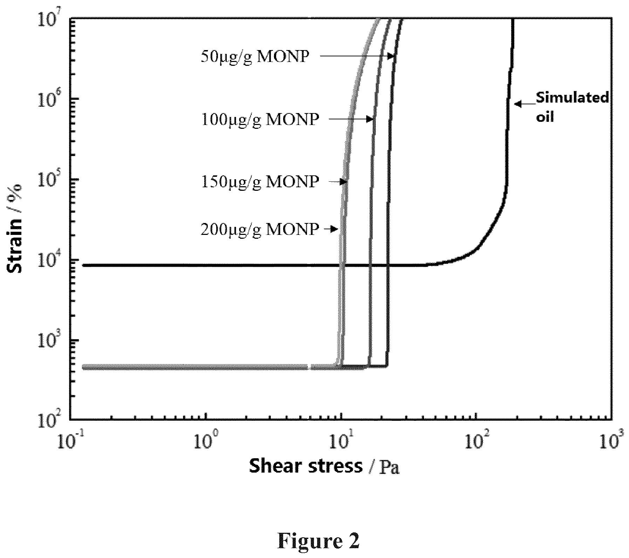

Experimental procedure: the pre-treated oil sample was loaded into the MCR101 rheometer measurement system, kept at a constant temperature of 60°C for 10 minutes, then the system temperature was lowered to 10°C at a cooling rate of 0.5°C/min and kept constantly for 30 minutes to fully form the structure. At this moment, a stress was applied to the oil sample at a stress loading rate of 5 Pa/min, and the curve of strain as a function of stress was measured to determine the yield stress of the waxy simulated oil. The change in the yield stress of the waxy simulated oil at different additive concentrations was measured, and the results are shown in FIG 2.

The test showed that the addition of nanocomposite pour point depressants helped reduce the yield stress of the waxy simulated oils.

### Test Example 3

This test example provided a test experiment on decreasing the pour point of the nanocomposite pour point depressant prepared in Experimental Example 2, as follows:
A crude oil with a wax content of 28.6% was used as a blank oil sample, and 200 ppm of the novel nanocomposite pour point depressant was added thereto as a test oil sample. The viscosity of two oil samples at different temperatures and different shear rates was measured by an MCR101 rheometer, and the pour points of the two oil samples were measured by a pour point meter.

Experimental procedure: the crude oil was heated to 60°C in a water bath, the pre-treated oil sample was loaded into the MCR101 rheometer measurement system, kept at a constant temperature of 60°C for 10 minutes, then the system temperature was lowered to a preset temperature at a cooling rate of 0.5°C/min and kept constant for 20 minutes. Five shear rates were selected, and the viscosity at the different shear rates was measured from the lowest to the highest shear rate. The results are shown in Table 1 and Table 2.

**Table 1. Viscosity data of crude oil (blank oil)**

| Temperature/°C | Viscosity/mPa·s | | | | |
|---|---|---|---|---|---|
| | 10s⁻¹ | 20s⁻¹ | 30s⁻¹ | 40s⁻¹ | 50s⁻¹ |
| 60 | 15 | | | | |
| 55 | 17 | | | | |
| 50 | 19 | | | | |
| 45 | 24 | | | | |
| 40 | 59 | | | | |
| 38 | 192 | 154 | 137 | 128 | 121 |
| 36 | 926 | 518 | 438 | 393 | 364 |
| 34 | 2650 | 1540 | 1200 | 1010 | 915 |

**Table 2. Viscosity data of crude oil (with 200 ppm novel nanocomposite pour point depressant)**

| Temperature/°C | Viscosity/mPa·s | | | | |
|---|---|---|---|---|---|
| | 10s⁻¹ | 20s⁻¹ | 30s⁻¹ | 40s⁻¹ | 50s⁻¹ |
| 50 | 37.2 | | | | |
| 45 | 38.5 | | | | |
| 40 | 48.2 | | | | |
| 38 | 75.9 | 70.3 | 68.7 | 65.2 | 63.1 |
| 35 | 131 | 125 | 120 | 119 | 116 |
| 32 | 416 | 347 | 312 | 287 | 266 |

The test results showed that for crude oil with a wax content of 28.6%, the viscosity at 40°C or less, after adding 200 ppm of the pour point depressant, was significantly lower than that of the blank oil. The pour point of the blank crude oil was 33°C, while the pour point of the crude oil with additive was lowered to 24°C, a decrease by 27%. Therefore, the addition of the novel nanocomposite pour point depressant helped improve its low-temperature fluidity.

### Test Example 4

This test example provides a test experiment on the magnetic response of the nanocomposite pour point depressant prepared in Experimental Example 2, as follows:
The yield stress of BH crude oil was measured by a TA DHR-2 rheometer. The experimental temperature was 15°C. EVA, NP nano pour point depressant, and MONP nano pour point depressant (product of Experimental Example 2) were respectively added to BH crude oil to obtain three waxy simulated oil samples (the content of the pour point depressant was 200 ppm in the comparative sample). The changes in yield stress of the several waxy simulated oil samples were measured.

Pre-treatment of the above waxy simulated oil sample: A pre-treatment was carried out in order to eliminate the memory of the waxy simulated oil on the thermal history and shear history. The specific operations were to heat the oil sample in a grinding-mouth bottle to 60°C in a water bath and to keep the temperature constant for 2 hours, as the basic sample of the experiment. The rheometer measurement system was also placed at 60°C during loading the sample.

Experimental procedure: the pre-treated oil sample was loaded into the TA DHR rheometer measurement system, kept at a constant temperature of 60°C for 10 minutes, then the system temperature was lowered to 20°C at a cooling rate of 0.5°C/min and kept constant for 30 minutes to fully form the structure. At this moment, a stress was applied to the oil sample at a stress loading rate of 5 Pa/min, and the curve of strain as a function of stress was measured to determine the yield stress of the waxy simulated oil. An alternating magnetic field was applied while measuring the yield stress, and the alternating magnetic field was selected to have parameters of a magnetic induction intensity of 0.3 T and a magnetic field frequency of 5 Hz. The changes in the yield stress of the waxy simulated oil under different alternating magnetic induction intensities were measured, and the test results are shown in Table 3.

**Table 3. Changes in yield values**

| Types | Yield value/Pa | | |
|---|---|---|---|
| | No magnetic field | Alternating magnetic field | Decreased by |
| EVA | 48 | 40 | 16.7% |
| NP | 32 | 26 | 18.8% |
| MONP | 17 | 8 | 52.9% |

The results in Table 3 showed that for the waxy oil incorporated with MONP, the introduction of the alternating magnetic field can significantly reduce the yield value of the oil sample by 52.9%. The waxy oils incorporated with EVA and NP nano pour point depressant also had a characteristic response to the magnetic field, but the yield value was decreased by less than 20% only. Therefore, the addition of MONP can significantly improve the magnetic control performance of the oil sample by lowering down its yield value remarkably.

### Comparative Example 1

This comparative example provides a comparative experiment of the viscosity reducing performance of the nanocomposite pour point depressant prepared in Experimental Example 2 and an existing pour point depressant.
(1) Samples involved:
   Formulation of blank oil samples and comparative oil samples: a waxy simulated oil containing 10% wax was prepared using D80 as a solvent oil. EVA, an NP nano pour point depressant and an MONP nano pour point depressant were respectively added to the waxy simulated oil to obtain three comparative oil samples (the content of the pour point depressant was 200 ppm in the comparative samples). A blank oil sample was also prepared. Among them, the EVA was a traditional pour point depressant, and the NP pour point depressant was a nano pour point depressant which was prepared by melt-blending an organic modified montmorillonite and EVA.
   Experimental oil sample: the nanocomposite pour point depressant (MONP) prepared in Experimental Example 2 was incorporated into the 10% waxy simulated oil above with an addition amount of 200 ppm of the MONP to obtain a test oil sample.
(2) Pre-treatment of the above comparative oil sample and experimental oil sample: A pre-treatment was carried out in order to eliminate the memory of the waxy simulated oil on the thermal history and shear history. The specific operations were to heat the oil sample in a grinding-mouth bottle to 60°C in a water bath and to keep the temperature constant for 2 hours, as the basic sample of the experiment. The rheometer measurement system was also set at 60°C during loading of the sample.
(3) Conducting a viscosity reduction test on the above comparative oil sample, blank oil sample and experimental oil sample: the pre-treated oil sample was loaded into the MCR101 rheometer measurement system, kept at a constant temperature of 60°C for 10 minutes, then the system temperature was lowered to 10°C at a cooling rate of 0.5°C/min and kept constant for 20 minutes. The curve of apparent viscosity as a function of shear rate was measured from this moment.

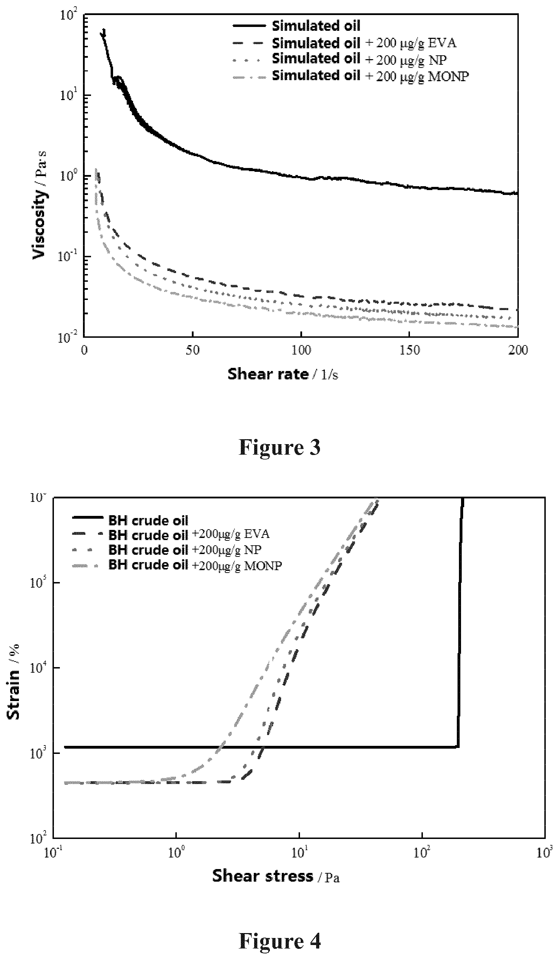

The experimental results are shown in FIG 3. The test results showed that the nanocomposite pour point depressant prepared in Experimental Example 2 of the present disclosure had a more excellent viscosity reducing effect than other types of existing pour point depressants. At the same temperature and shear rate, the viscosity of the simulated oil incorporated with MONP nano pour point depressant was significantly lower than that of the simulated oil incorporated with other pour point depressants.

### Comparative Example 2

This comparative example provides a comparative experiment of the nanocomposite pour point depressant prepared in Experimental Example 2 and an existing pour point depressant, in terms of reduction in the yield value of waxy crude oil.
(1) Samples involved:
   Formulation of blank oil samples and comparative oil samples: the yield stress of BH crude oil was measured using an MCR101 rheometer, under an experimental temperature of 10°C. EVA, an NP nano pour point depressant and an MONP nano pour point depressant were respectively added to the BH crude oil to obtain comparative oil samples (the content of the pour point depressant was 200 ppm in the comparative oil samples). A blank oil sample was also prepared. Among them, the EVA was a traditional pour point depressant, and the NP pour point depressant was a nano pour point depressant which was prepared by melt-blending an organic modified montmorillonite and EVA.
   Experimental oil sample: the nanocomposite pour point depressant (MONP) prepared in Experimental Example 2 was incorporated in the BH crude oil, and the content of the MONP was 200 ppm.
(2) Pre-treatment of the above comparative sample and experimental sample: A pre-treatment was carried out in order to eliminate the memory of the waxy simulated oil on the thermal history and shear history. The specific operations were to heat the oil samples in a grinding-mouth bottle to 60°C in a water bath and to keep the temperature constant for 2 hours, as the basic sample of the experiment. The rheometer measurement system was also set at 60°C during loading of the sample.
(3) Conducting a yield stress test on the above comparative oil sample, blank oil sample and experimental oil sample: the pre-treated oil sample was loaded into the MCR101 rheometer measurement system, kept at a constant temperature of 60°C for 10 minutes, then the system temperature was lowered to 10°C at a cooling rate of 0.5°C/min and kept constant for 30 minutes to fully form the structure. At this moment, a stress was applied to the oil sample at a stress loading rate of 5 Pa/min, and the curve of strain as a function of stress was measured to determine the yield stress of the waxy simulated oil. The changes in the yield stress of the waxy simulated oil at different additive concentrations were measured.

The experimental results are shown in FIG 4. The test results showed that the nanocomposite pour point depressant prepared in Experimental Example 2 of the present disclosure had a more excellent effect of lowering the yield value than other types of existing pour point depressants. The yield value of crude oil incorporated with the MONP nano pour point depressant was significantly lower than that of crude oil incorporated with other pour point depressants.

It can be seen that the nanocomposite pour point depressant provided by the embodiments of the present disclosure can significantly reduce the pour point, viscosity and yield stress of the waxy crude oil, and is suitable for all applications in need of improvement on low-temperature fluidity of waxy crude oil, including the field of crude oil pipeline transportation. The application of the present invention can lower the difficulty of transporting waxy crude oil, reduce the transport resistance of waxy crude oil, save energy, and reduce the transportation cost of crude oil, which makes the invention highly economic.

## Claims

1. A nanocomposite pour point depressant, wherein the components for preparing the nanocomposite pour point depressant comprise, in terms of mass percentage:
0.1 wt% to 3 wt% of nickel cobaltate nanoparticles, 0.5 wt% to 15 wt% of ethylene-vinyl acetate copolymer, and the balance being an organic solvent capable of dissolving the ethylene-vinyl acetate copolymer;
wherein the organic solvent is crude oil, diesel, or gasoline.

2. A method for preparing a nanocomposite pour point depressant according to claim 1, comprising:
dispersing nickel cobaltate nanoparticles in an organic solution in which an ethylene-vinyl acetate copolymer is dissolved, to prepare the nanocomposite pour point depressant.

3. The method for preparing a nanocomposite pour point depressant according to claim 2, wherein the dispersing is carried out by melt blending.

4. The method for preparing a nanocomposite pour point depressant according to claim 3, wherein the melt blending is carried out under a condition of stirring at 50 to 80°C for 10 to 50 minutes.

5. Use of the nanocomposite pour point depressant according to claim 1 by adding the nanocomposite pour point depressant to a waxy crude oil in storage or in pipeline transportation.

6. The use of a nanocomposite pour point depressant according to claim 5, wherein the nanocomposite pour point depressant is added in an amount of 100 to 300 ppm.

7. The use of a nanocomposite pour point depressant according to claim 5, further comprising a step of applying an alternating magnetic field to the waxy crude oil to which the nanocomposite pour point depressant is added.

## Patentansprüche

1. Nanokompositstockpunktverbesserer, wobei die Komponenten zum Herstellen des Nanokompositstockpunktverbesserers in Masseprozent Folgendes umfassen:
0,1 Gew.-% bis 3 Gew.-% Nickel-Cobaltat-Nanopartikel, 0,5 Gew.-% bis 15 Gew.-% Ethylen-Vinylazetat-Copolymer, und wobei der Rest ein organisches Lösungsmittel ist, das imstande ist, das Ethylen-Vinylazetat-Copolymer aufzulösen;
wobei das organische Lösungsmittel Rohöl, Diesel oder Benzin ist.

2. Verfahren zum Herstellen eines Nanokompositstockpunktverbesserers nach Anspruch 1, umfassend:
Dispergieren von Nickel-Cobaltat-Nanopartikeln in einem organischen Lösungsmittel, in dem ein Ethylen-Vinylazetat-Copolymer aufgelöst ist, um den Nanokompositstockpunktverbesserer herzustellen.

3. Verfahren zum Herstellen eines Nanokompositstockpunktverbesserers nach Anspruch 2, wobei das Dispergieren durch Schmelzmischung durchgeführt wird.

4. Verfahren zum Herstellen eines Nanokompositstockpunktverbesserers nach Anspruch 3, wobei die Schmelzmischung unter einer Bedingung des Rührens bei 50 bis 80 °C für 10 bis 50 Minuten durchgeführt wird.

5. Verwendung des Nanokompositstockpunktverbesserers nach Anspruch 1 durch Hinzufügen des Nanokompositstockpunktverbesserers zu einem wachsartigen Rohöl in einem Lager oder in einer Pipeline-Beförderung.

6. Verwendung eines Nanokompositstockpunktverbesserers nach Anspruch 5, wobei der Nanokompositstockpunktverbesserer in einer Menge von 100 bis 300 ppm hinzugefügt wird.

7. Verwendung eines Nanokompositstockpunktverbesserers nach Anspruch 5, weiter umfassend einen Schritt des Anlegens eines Wechselstrommagnetfeldes an das wachsartige Rohöl, dem der Nanokompositstockpunktverbesserer hinzugefügt wird.

## Revendications

1. Abaisseur de point d'écoulement nanocomposite, dans lequel les composants pour préparer l'abaisseur de point d'écoulement nanocomposite comprennent, en termes de pourcentage en masse :
de 0,1 % en poids à 3 % en poids de nanoparticules de cobaltate de nickel, de 0,5 % en poids à 15 % en poids de copolymère éthylène-acétate de vinyle, et le reste étant un solvant organique en mesure de dissoudre le copolymère éthylène-acétate de vinyle ;
dans lequel le solvant organique est du pétrole brut, du diesel, ou de l'essence.

2. Procédé de préparation d'un abaisseur de point d'écoulement nanocomposite selon la revendication 1, comprenant :
la dispersion de nanoparticules de cobaltate de nickel dans une solution organique dans laquelle un copolymère éthylène-acétate de vinyle est dissous, pour préparer l'abaisseur de point d'écoulement nanocomposite.

3. Procédé de préparation d'un abaisseur de point d'écoulement nanocomposite selon la revendication 2, dans lequel la dispersion est réalisée par mélange à l'état fondu.

4. Procédé de préparation d'un abaisseur de point d'écoulement nanocomposite selon la revendication 3, dans lequel le mélange à l'état fondu est réalisé dans des conditions d'agitation à une température comprise entre 50 °C et 80 °C pendant une durée comprise entre 10 minutes et 50 minutes.

5. Utilisation de l'abaisseur de point d'écoulement nanocomposite selon la revendication 1 en ajoutant l'abaisseur de point d'écoulement nanocomposite à un pétrole brut paraffineux lors du stockage ou du transport par pipeline.

6. Utilisation d'un abaisseur de point d'écoulement nanocomposite selon la revendication 5, dans laquelle l'abaisseur de point d'écoulement nanocomposite est ajouté dans une quantité comprise entre 100 ppm et 300 ppm.

7. Utilisation d'un abaisseur de point d'écoulement nanocomposite selon la revendication 5, comprenant en outre une étape d'application d'un champ magnétique alternatif au pétrole brut paraffineux auquel l'abaisseur de point d'écoulement nanocomposite est ajouté.
